# EUROPEAN PATENT APPLICATION

(11) **EP 2 207 277 A1**
(43) Date of publication of application: **14.07.2010**
(21) Application number: 07829938.5
(22) Date of filing: 16.10.2007
(51) Int. Cl.: H04B 7/26

(54) **RELAY STATION DEVICE, TERMINAL STATION DEVICE, WIRELESS COMMUNICATION SYSTEM, AND METHOD FOR DISTRIBUTING LOAD**

(71) Applicant: Fujitsu Limited, Kawasaki-shi, Kanagawa 211-8588 (JP)
(72) Inventor: KOYANAGI, Kenichiro, Kawasaki-shi Kanagawa 211-8588 (JP)
(74) Representative: Wilding, Frances Ward
(86) International application number: PCT/JP2007/070204
(87) International publication number: WO 2009/050794

(57) **Abstract**

A relay station measures a load of the relay station. Based on the measured load and a load of a base station directly connected to the relay station or a load of another relay station directly connected to the relay station and a base station, the relay station calculates a load that is reported to a mobile station directly connected to the relay station or is reported to another relay station directly connected to the relay station and a mobile station. The calculated load is reported from the relay station as load information of the relay station. A mobile station or another relay station directly connected to the relay station changes stations to a base station or still another relay station, based on the load information reported from an upstream relay station.

## Description

### TECHNICAL FIELD

The embodiments discussed herein are related to a relay station, a mobile station, a wireless communication system, and a load distribution method.

### BACKGROUND ART

In a wireless communication system, a mobile station connects to the base station affording the best radio quality among base stations in a service area. Since connections to base stations change as mobile stations move around, the number of mobile stations connected to each base station does not remain constant but fluctuates. Consequently, imbalances in load occur among the base stations such as the number of connected mobile stations, the amount of data to be transmitted, and radio channel resource utilization. A base station with a heavy load has problems such as rejection of a connection request from a new mobile station, deterioration of transmission rate, and timeout before data is transmitted completely.

In light of this, one load distribution method involves the exchange of load information among base stations and instructing of a mobile station connected to a base station having a heavy load to perform handover (change of connection destination), so that the imbalance in load among base stations is resolved. Another method of load distribution involves the collection of load information from nearby base stations by mobile stations, where a mobile station that is connected to a base station having a heavy load requests handover to another base station.

Such imbalances in load also occur in ad-hoc systems in which mobile stations form an autonomously distributed system. One load distribution method in this case involves the exchange of load information among mobile stations and the selection of a mobile station to be connected based on loads of each mobile station (see, for example, Patent Document 1).

Standards such as IEEE802.16j are investigating a system in which one or more relay stations are inserted between a base station and a mobile station. In this system, a mobile station is connected to a base station directly or through one or more relay stations. Here, in a path between a base station and a mobile station, the base station is located upstream from the mobile station, and the mobile station is located downstream from the base station. A relay station located towards the base station is called an upstream relay station, and a relay station located towards the mobile station is called a downstream relay station.

Patent Document 1: Japanese Laid-Open Patent Publication No. 2005-303828 (see the Solution in the Abstract)

### DISCLOSURE OF INVENTION

### PROBLEM TO BE SOLVED BY THE INVENTION

However, even though load distribution can be performed when a base station reports a load thereof, further study is needed when a relay station is taken into consideration. Even when a relay station reports a load thereof, efficient load distribution cannot be expected when heavy loads are present between the relay station and an upstream base station or between the relay station and an upstream relay station.

An object is to perform load distribution reflecting the loads of upstream stations (base stations or upstream relay stations) of a relay station that is wirelessly communicating with a mobile station directly.

### MEANS FOR SOLVING PROBLEM

A relay station measures a load of the relay station and calculates a load reflecting load of an upstream station, based on the measured load and, a load of a base station or an upstream relay station directly connected to the relay station. The relay station reports the calculated load as load information to a mobile station or a downstream relay station. The mobile station or downstream relay station directly connected to this relay station changes base stations or relay stations based on the reported load information.

As a result, a relay station reports load information reflecting load of a base station or an upstream relay station directly connected to the relay station.

### EFFECT OF THE INVENTION

Load distribution can be performed reflecting loads of upstream stations.

### BRIEF DESCRIPTION OF DRAWINGS

FIG. 1 is a diagram illustrating a wireless communication system according to a first embodiment;
FIG. 2 is a diagram illustrating a relay station according to the first embodiment;
FIG. 3 is a flowchart of a process for reporting load information according to the first embodiment;
FIG. 4 is a diagram explaining an example of reporting the load information according to the first embodiment;
FIG. 5 is a diagram explaining another example of reporting the load information according to the first embodiment;
FIG. 6 is a flowchart of a process of load calculation according to the first embodiment;
FIG. 7 is a flowchart of a load distribution process according to the first embodiment;
FIG. 8 is a diagram illustrating a relay station according to a second embodiment;
FIG. 9 is a diagram illustrating one example of a typical radio channel frame;
FIG. 10 is a diagram illustrating one example of a typical message format;
FIG. 11 is a diagram illustrating a conventional radio channel frame;
FIG. 12 is a diagram illustrating a conventional message format for a relay station;
FIG. 13 is a diagram illustrating a radio channel frame of a relay station according to the second embodiment;
FIG. 14 is a diagram illustrating a message format of the relay station according to the second embodiment;
FIG. 15 is a diagram illustrating another example of a radio channel frame for the relay station according to the second embodiment;
FIG. 16 is a diagram illustrating another example of a message format for the relay station according to the second embodiment;
FIG. 17 is a diagram illustrating a mobile station according to the second embodiment; and
FIG. 18 is a diagram illustrating a load distribution process according to the second embodiment.

### EXPLANATIONS OF LETTERS OR NUMERALS

- BS: base station
- MS: mobile station
- RS: relay station
- 11,: 41 relay station
- 16: load collecting unit
- 17: load measuring unit
- 18, 85: control unit
- 20: load calculating unit
- 31: I/Q constellation
- 32: signal point
- 36: message
- 37: information element
- 42, 84: load estimating unit
- 43: structure information adjusting unit
- 51: radio channel frame
- 61, 72, 75, 78: message of map (MAP)
- 81: mobile station

### BEST MODE(S) FOR CARRYING OUT THE INVENTION

Preferred embodiments of a relay station, a mobile station, a wireless communication system, and a load distribution method will be explained with reference to the accompanying drawings. In the explanation below, like reference numerals are used for like items, and repetitive explanations are omitted. Embodiments described here do not limit the invention.

### [First Embodiment]

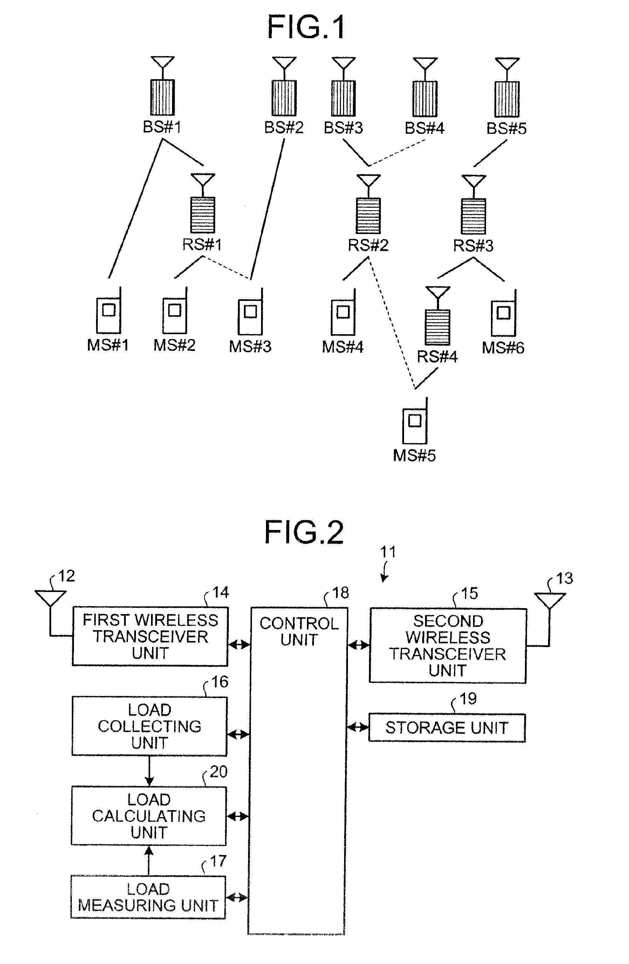

FIG. 1 is a diagram illustrating a wireless communication system according to a first embodiment. As depicted in FIG. 1, the wireless communication system according to the first embodiment includes two or more base stations (BS), one or more relay stations (RS), and one or more mobile stations (MS). As an example, FIG. 1 depicts five base stations BS#1 through BS#5, four relay stations RS#1 through RS#4, and six mobile stations MS#1 through MS#6. For RS#1, BS#1 is an upstream station. For BRS#1, RS#1 is a downstream relay station. For RS#3, RS#4 is a downstream relay station. For RS#4, RS#3 is an upstream relay station.

Depending on the location of a mobile station, the mobile station is connected directly to a base station (the relationship between MS#1 and BS#1), or is connected to a base station through a relay station (the relationship among MS#2, RS#1, and BS#1). A relay station is directly connected to a base station (the relationship between RS#1 and BS#1), or is connected to a base station through another relay station (the relationship among RS#4, RS#3, and BS#5). Accordingly, a mobile station may be connected to a base station through multiple relay stations (the relationship between MS#5 and BS#5).

A relay station may be located in an area enabling wireless connection to multiple base stations or other relay stations. Corresponding to the movement of a mobile station, the mobile station may be located in an area enabling wireless connections to multiple base stations or multiple relay stations. FIG. 1 illustrates a situation where one station can be connected to multiple stations. In FIG. 1, solid lines between stations indicate actual connections between stations. Broken lines between stations indicate that stations are not actually interconnected but can be interconnected. Central frequencies or frequency widths of radio channels may be identical or different.

Not particularly limited hereto, but in the explanation below, the wireless communication system is assumed to be an IEEE802.16 orthogonal frequency division multiple access (OFDMA) system. In the IEEE802.16 OFDMA system, multiple relay stations or mobile stations share a radio channel resource made up of a time axis and a frequency axis. Not particularly limited hereto, but in the explanation below, a time division duplex (TDD) scheme and a D&F (Decode & Forward) scheme are assumed as a duplex communication scheme and a relay scheme, respectively.

FIG. 2 is a diagram illustrating a relay station according to the first embodiment. As depicted in FIG. 2, a relay station 11 according to the first embodiment includes antennae 12 and 13, a first wireless transceiver unit 14 for communicating with upstream stations, a second wireless transceiver unit 15 for communicating with downstream stations, a load collecting unit 16, a load measuring unit 17, a control unit 18, a storage unit 19, and a load calculating unit 20.

The load collecting unit 16 collects, through the antenna 12 and the first wireless transceiver unit 14, load information reported from a connected upstream station and nearby upstream stations. The load measuring unit 17 measures a load of the relay station 11. The load of the relay station 11 may be the number of mobile stations directly connected to the relay station 11 or the number of other downstream relay stations, the amount of data to be transmitted, or radio channel resource utilization, or any combination of two or more.

The load calculating unit 20 calculates loads to be reported to downstream stations based on the load known from the load information collected by the load collecting unit 16 and based on the load measured by the load measuring unit 17. The first wireless transceiver unit 14 receives, through the antenna 12, signals from the connected upstream station and the nearby upstream stations, demodulates and decodes the signals, and measures radio quality with respect to the upstream stations, based on the signals. The radio quality may be the received power or the signal-to-interference-plus-noise power. The first wireless transceiver unit 14 also encodes and modulates signals to be transmitted to the connected upstream station and transmits the signals through the antenna 12.

The second wireless transceiver unit 15 reports the load calculated by the load calculating unit 20 as load information of the relay station 11. The second wireless transceiver unit 15 receives signals from downstream stations connected to the relay station 11 and performs a receiving process such as demodulation and decoding. The second wireless transceiver unit 15 also encodes or modulates signals to be transmitted to downstream stations connected to the relay station 11 and transmits the signals through the antenna 13.

The control unit 18 selects an upstream station based on the radio quality measured by the first wireless transceiver unit 14 and the load information collected by the load collecting unit 16. The control unit 18 manages, for downstream stations, the connections and allocates radio channels. The control unit 18 reports information concerning the managed downstream stations to upstream stations or requests radio channel allocation from the upstream stations. The storage unit 19 stores information concerning the managed downstream stations.

Instead of the first and the second wireless transceiver units 14 and 15 performing processes for upstream stations and downstream stations in parallel, one wireless transceiver unit may perform processes for upstream and downstream stations by time-sharing. Multiple wireless transceiver units may perform processes for upstream stations; multiple wireless transceiver units may perform processes for downstream stations, etc.

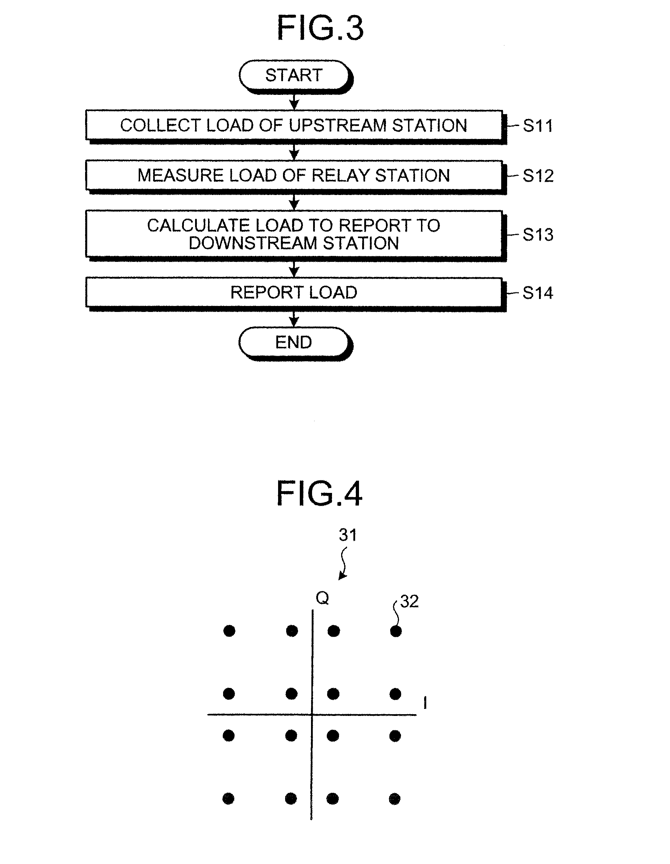

FIG. 3 is a flowchart of a process for reporting load information according to the first embodiment. As depicted in FIG. 3, when the relay station 11 starts the process for reporting load information, the load collecting unit 16 collects load information reported by upstream stations (step S11). The load measuring unit 17 measures a load of the relay station 11 (step S12). The load calculating unit 20 calculates loads to be reported to downstream stations based on the loads of the upstream stations acquired at step S11 and the load of the relay station 11 measured at step S12 (step S13). An example of load calculation will be described later. The loads calculated at step S13 are reported as the load information of the relay station 11 through the second wireless transceiver unit 15 and the antenna 13 (step S14), and the reporting process ends. The reporting process is periodically conducted.

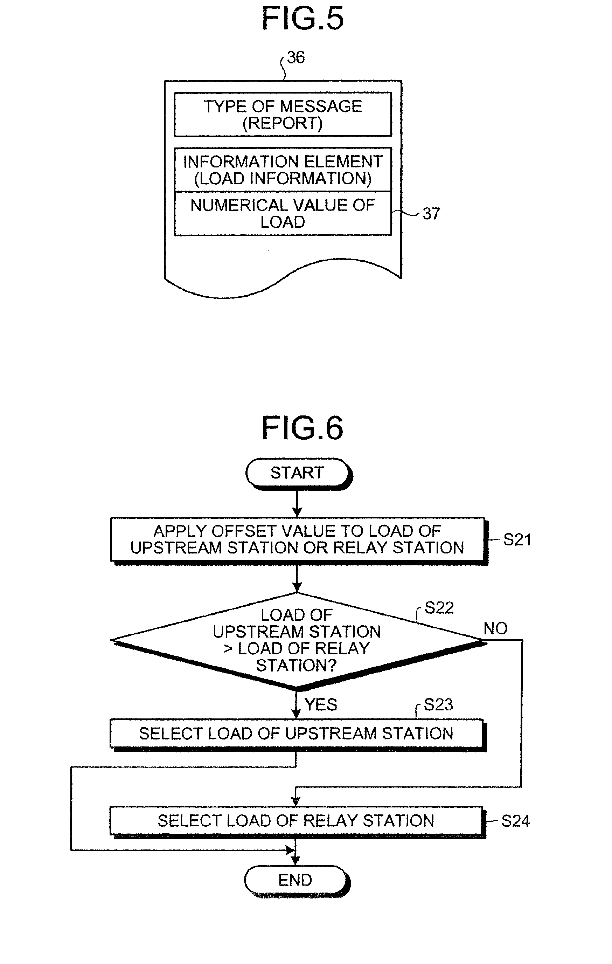

FIG. 4 and FIG. 5 are diagrams explaining an example of reporting the load information according to the first embodiment. As depicted in FIG. 4, for example, the load information is reported as a signal point 32 of an I/Q constellation 31. Beforehand, each signal point 32 of the I/Q constellation 31 is correlated with a value of load. The relay station 11 selects a signal point that is the nearest to the load calculated by the load calculating unit 20 and reports the point. A base station may report load information in a similar way. Another way of reporting may be as depicted in FIG. 5; the load information may be reported as a message. In this case, the load information uses, for example, an information element 37 in a message 36 and is reported as a numerical value. The load information of a base station may be reported in a similar way.

FIG. 6 is a flowchart of a process of load calculation according to the first embodiment. As depicted in FIG. 6, when the calculation of load begins at step S13 (see FIG. 3), the load calculating unit 20 applies an offset value to the loads of the upstream stations acquired by the load collecting unit 16 or the loads of the relay station 11 acquired by the load measuring unit 17 and provides a weighted value (step S21). This weighting process is performed as needed. For example, when a downstream station selects an upstream station taking account of factors other than load, the weighting process is performed.

The offset value may be constant or variable. For instance, as an offset value, a variable based on the radio quality of a signal received from an upstream station or based on frequency of handover may be used. As an offset value, a constant value based on a delay due to a route via a relay station may be used.

The load calculating unit 20 compares the loads of the upstream stations acquired by the load collecting unit 16 with the loads of the relay station 11 acquired by the load measuring unit 17 (step S22). If the weighting process is performed at step S21, values weighted with the offset value are compared. If the loads of the upstream stations are larger (step S22: YES), the loads of the upstream stations are selected as the load information of the relay station 11 (step S23) and the calculating process is completed. If the load of the relay station 11 is larger (step S22: NO), the load of the relay station 11 is selected as the load information of the relay station 11 (step S24), and the calculating process is completed. In this example, the selection of larger loads reflects the loads of the upstream stations. Loads may be added to acquire the sum of loads as the load information in order to reflect the loads of the upstream stations.

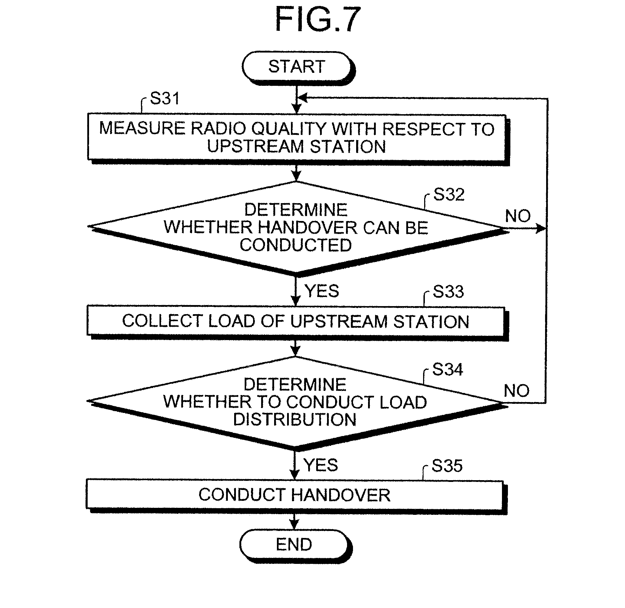

FIG. 7 is a flowchart of a load distribution process according to the first embodiment. The load distribution process is performed at the relay stations and the mobile stations depicted to be downstream stations in the wireless communication system of FIG. 1. The structure and the operation of a relay station have been explained with reference to FIG. 2 through FIG. 6. The structure of a mobile station is similar to a conventional device that possesses a function for distributing loads.

As depicted in FIG. 7, when the load distribution process begins at a downstream station, the downstream station receives signals coming from a connected upstream station and nearby upstream stations and measures the radio quality of each signal (step S31). The downstream station compares each radio quality measured at step S31 with the radio quality of a signal received from a currently connected upstream station to determine whether handover can be conducted (step S32). Whether handover is to be performed may be determined based on the comparison of each radio quality measured at step S31 with a given threshold.

If there is no upstream station that can accept the handover (step S32: NO), the process returns to step S31. If there is an upstream station that can accept the handover (step S32: YES), the downstream station collects load information that the upstream station, i.e., the target of the handover, reports (step S33). From the load information, the downstream station can know the load of the upstream station. The load of the upstream station reflects loads of stations further upstream.

The downstream station compares the load of the upstream station (handover target) with the load of the currently connected upstream station, and determines whether to conduct load distribution (step S34). If it is determined that handover to the upstream station (handover target) can be expected to improve transmission rate (step S34: YES), handover from the currently connected upstream station to the upstream station (handover target) is conducted (step S35), and the load distribution process is ended. If handover to the upstream station (handover target) cannot be expected to improve the transmission rate (step S34: NO), the process returns to step S31.

According to the first embodiment, the relay station 11 reports load information that reflects loads of other stations including a base station to which the relay station 11 is directly connected, or another relay station directly connected to the relay station 11 and the base station. In this way, the loads of upstream stations can be relayed to downstream stations. Therefore, in the wireless communication system, because a downstream station can perform load distribution reflecting the loads of upstream stations, the load distribution is more efficient.

For instance, in the wireless communication system depicted in FIG. 1, loads of base stations or relay stations are assumed to change from 0 (minimum) to 100 (maximum) and loads of the base station BS#1, the relay station RS#1, and the base station BS#2 are assumed to be 100, 25, and 75, respectively. In this example, the relay station RS#1 compares 25 with 100 of the base station BS#1, the connected upstream station. The relay station RS#1 selects 100, the larger load, and reports the load as load information for the relay station RS#1. When the mobile station MS#3 is within an area enabling connection with either the relay station RS#1 or the base station BS#2, the mobile station MS#3 compares 100, the load reported from the relay station RS#1, with 75, the load reported from the base station BS#2. The mobile station MS#3 selects, as an upstream station for connection, the base station BS#2 having the smaller load value.

### [Second Embodiment]

A second embodiment relates to a wireless communication system including structure information that defines a frame structure within a radio channel frame. In this wireless communication system of the second embodiment, an upstream station reports, using the structure information, load information reflecting loads of stations further upstream. A downstream station estimates, from the structure information, loads of the upstream stations (at least wireless devices that wirelessly communicate with a mobile station) and performs load distribution.

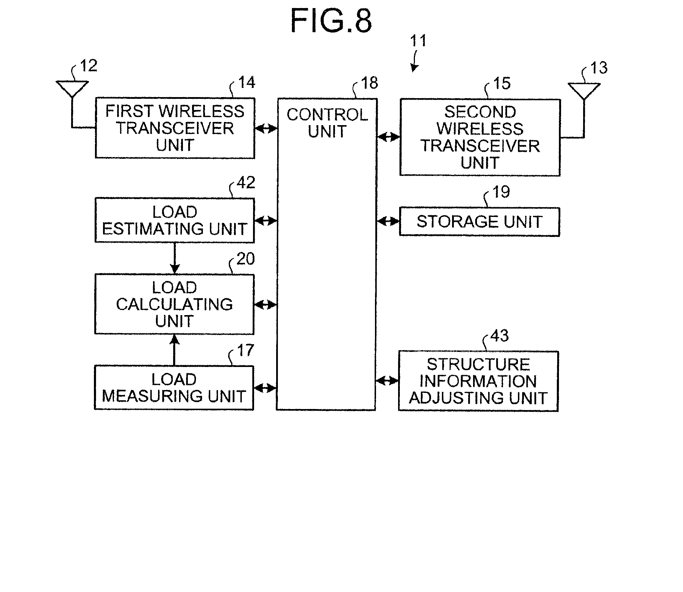

FIG. 8 is a diagram illustrating a relay station according to the second embodiment. As depicted in FIG. 8, a relay station 41 according to the second embodiment differs from the relay station 11 according to the first embodiment in that a load estimating unit 42 replaces the load collecting unit 16, and a structure information adjusting unit 43 is further included. The load estimating unit 42 receives, through the antenna 12 and the first wireless transceiver unit 14, structure information reported from a connected upstream station and nearby upstream stations, and based on the structure information, estimates the loads of the upstream stations. The load calculating unit 20 calculates a load to be reported to a downstream station, based on the loads estimated by the load estimating unit 42 and the loads measured by the load measuring unit 17.

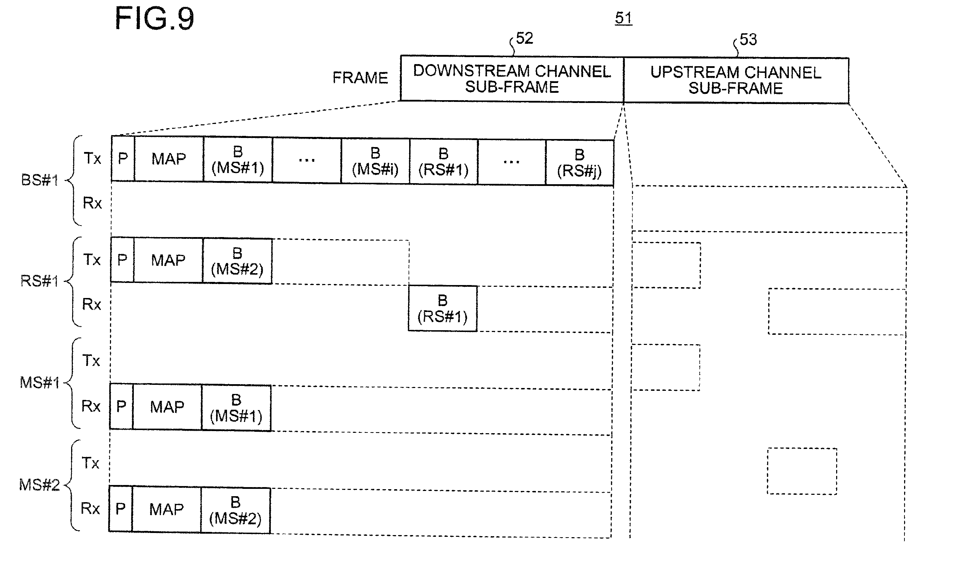

The structure information adjusting unit 43 reflects the loads calculated by load calculating unit 20 on the structure information of the relay station 41. The control unit 18 selects an upstream station for connection, based on the radio quality measured by the first wireless transceiver unit 14 and the loads estimated by the load estimating unit 42. Other components are similar to the first embodiment. With reference to FIG. 9 through FIG. 16, a method for reporting load information using the structure information will be explained.

FIG. 9 is a diagram illustrating one example of a typical radio channel frame. As depicted in FIG. 9, a radio channel frame 51 is made up of a downstream channel sub-frame 52 and an upstream channel sub-frame 53. Downstream channel means a radio channel from an upstream station to a downstream station, and upstream channel means a radio channel from a downstream channel to an upstream channel.

The downstream channel sub-frame 52 includes areas of a preamble (P), a map (MAP), and a burst (B). The preamble (P) is a signal with a known pattern used for a base station, a relay station, and a mobile station to be synchronized. The map (MAP) is a message for defining a frame structure such as a burst point in the radio channel frame 51, burst length, a modulation type of burst, and a coding type, and for reporting the frame structure to a downstream relay station or mobile station. The message corresponds to the structure information. The burst (B) is a block for transmission data sent to a downstream relay station or mobile station.

In the example depicted in FIG. 9, in the downstream channel, the base station (BS#1) or the relay station (RS#1) transmits the preamble (P), the map (MAP), and the burst (B) to the relay station (RS#1) or the mobile station (MS#1, MS#2). The burst (B) for the relay station (RS#1) includes a burst for the relay station (RS#1) and, a burst for the mobile station (MS#2) connected to the relay station (RS#1) or a burst for a downstream relay station.
A base station or relay station may transmit a burst, designating in the map (MAP)for a mobile station or relay station further downstream and connected to a downstream relay station.

The relay station (RS#1) transmits, among bursts (B) received from the upstream base station (BS#1) or an upstream relay station, a burst (B) for a downstream relay station or the mobile station (MS#2) at the next or a subsequent frame. Consequently, a map (MAP) that the relay station (RS#1) transmits can be different from a map (MAP) that the upstream station (BS#1) connected to the relay station (RS#1) transmits.

A downstream relay station or the mobile station (MS#2) directly connected to the relay station (RS#1) synchronizes the relay station (RS#1) using the preamble (P). Usually, when a relay station or mobile station is present in an area enabling the relay station or mobile station to establish communication with multiple base stations or relay stations, the relay station or mobile station distinguishes the base stations or relay stations based on the known pattern of the preamble (P) and selects a base station or relay station affording the best radio quality.

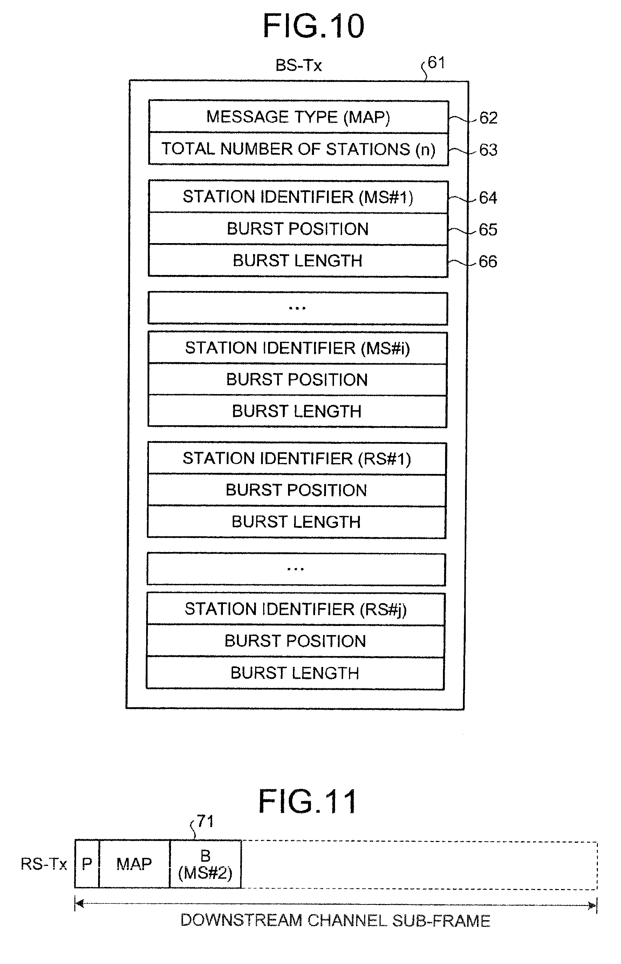

FIG. 10 is a diagram illustrating one example of a typical message format. As depicted in FIG. 10, a message 61 of the map (MAP) includes a message type 62, the number of relay stations and mobile stations (total number of stations) 63 that transmit or receive data within a frame defined by the map (MAP), an identifier (station identifier) 64 for the relay stations or mobile stations, a burst position 65 and a burst length 66 for the relay stations or mobile stations. As a result, the map (MAP) becomes longer along with an increase in the number of relay stations or mobile stations that transmit or receive data within one frame. In FIGs. 10, 12, 14, and 16, designation such as a modulation type of each burst or an encoding type is omitted.

A relay station analyzes all the contents of the map (MAP) of an upstream base station or relay station. Consequently, the relay station can estimate a load of an upstream station with the load estimating unit 42. For instance, the relay station estimates a load of an upstream station based on factors such as the total number of stations or the sum of burst lengths within the map (MAP) of each frame, or based on the number of different station identifiers within a given number of frames. These factors may be replaced with an average over a given period. The sum of burst lengths can be acquired as radio channel resource utilization, a proportion of a burst to the radio channel resource (frame length). The radio channel resource (frame length) can be acquired from a frame length and a frequency range. The total number of stations or the number of different station identifiers within a given number of framesis identical to the number of relay stations and mobile stations directly connected.

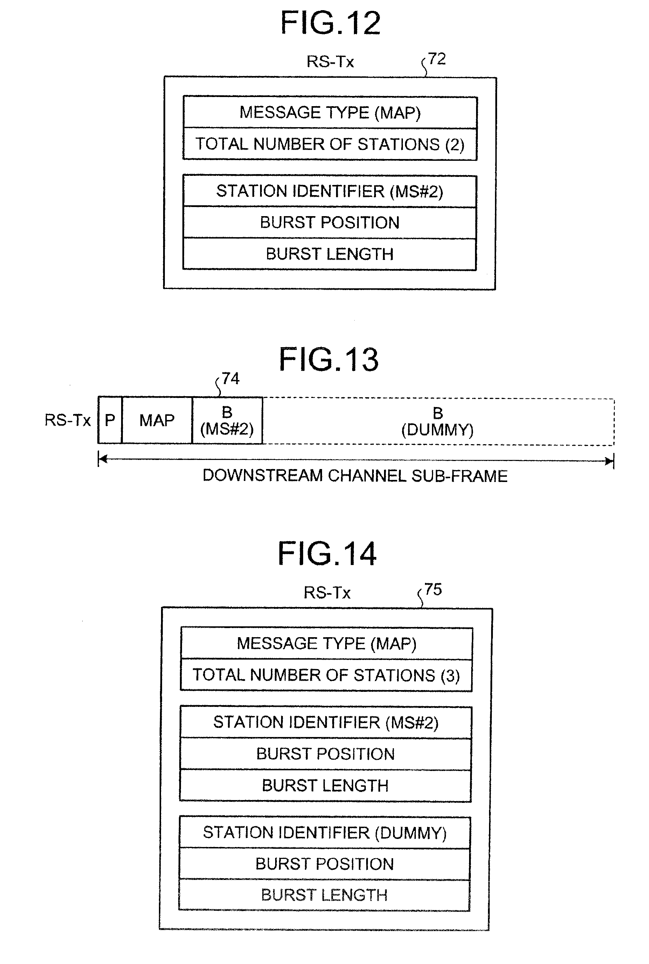

FIG. 11 and FIG. 12 are diagrams each illustrating a conventional radio channel frame and a conventional message format for a relay station. As depicted in these figures, a relay station, from among bursts (B) transmitted from a connected upstream station in a downstream channel sub-frame 71, transmits only a burst (B) for a relay station directly connected to the relay station or a mobile station (MS#2) and does not transmit part of bursts indicated by a broken line in FIG. 11. As a result, the total number of stations or the sum of burst lengths included in the message 72 of the map (MAP) becomes smaller in comparison with the connected upstream station. Namely, the relay station has not reported a heavy load of the connected upstream station to a downstream station. In light of this, in the second embodiment, a relay station reports a load of the connected upstream station to the downstream station as described below.

FIG. 13 and FIG. 14 are diagrams illustrating one example of a radio channel frame and a message format of a relay station according to the second embodiment. As depicted in these figures, a relay station, from among bursts (B) transmitted from a connected upstream station in a downstream channel sub-frame 74, transmits bursts for a downstream station and a mobile station (MS#2), but a message 75 of a map (MAP) includes a hypothetical relay station or mobile station as a dummy. The structure information adjusting unit 43 of the relay station 41 controls the message 75 of the map (MAP) so that such a dummy is included. A burst (B) for the dummy is indicated by a broken line in FIG. 13 and is not transmitted. The hypothetical relay station or mobile station is considered as, for example, a relay station or mobile station that is not present in the area but can express loads of upstream stations.

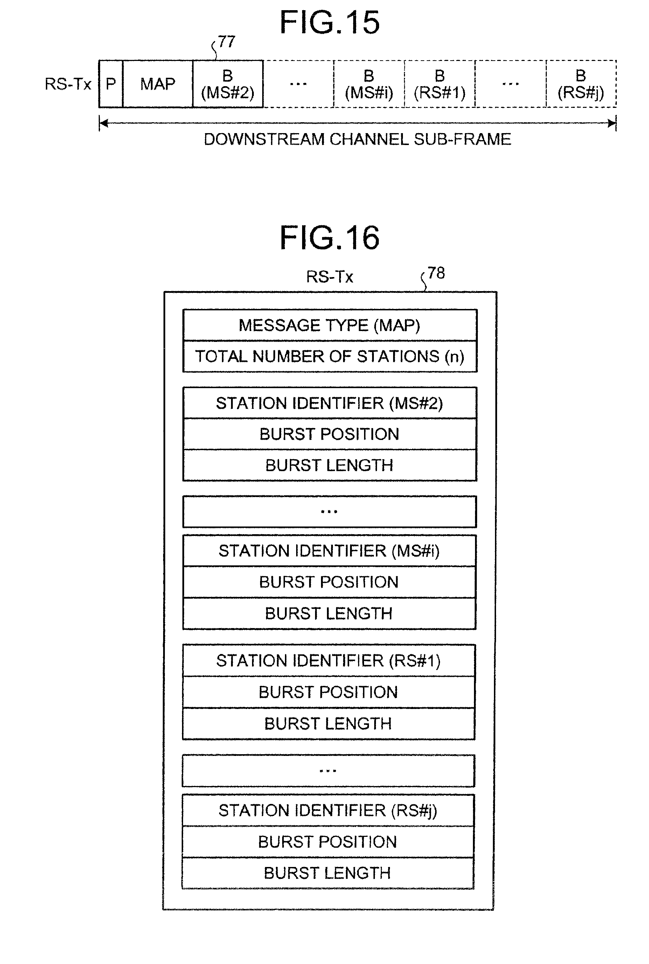

FIG. 15 and FIG. 16 are diagrams illustrating another example of a radio channel frame and a message format for a relay station according to the second embodiment. As depicted in these figures, a relay station, from among bursts (B) transmitted from a connected upstream station in a downstream channel sub-frame 77, transmits a burst (B) for a downstream relay station and a mobile station (MS#2) and does not transmit bursts in a part indicated by a broken line in FIG. 15. However, a message 78 of the map (MAP) is identical to a message of the map (MAP) transmitted from the connected upstream station. The structure information adjusting unit 43 of the relay station 41 controls the message 78 of the map (MAP) so that a message of the map (MAP) transmitted from the connected upstream station is transferred as it is to a downstream station. This method is applicable to a situation where a base station or relay station expresses in the map (MAP), a relay station or mobile station further downstream and connected to a downstream relay station.

Whether a dummy is included in a message of the map (MAP), or a message of the map (MAP) of the connected upstream station is transferred as it is, the relay station does not transmit an unnecessary burst (B) that may interfere with other cells and can relay a heavy load of the connected upstream station to a downstream station that is connected to the relay station. The load estimating unit 42 of the relay station 41 can estimate a load of an upstream station, based on the total number of stations or the total burst length included in the map (MAP).

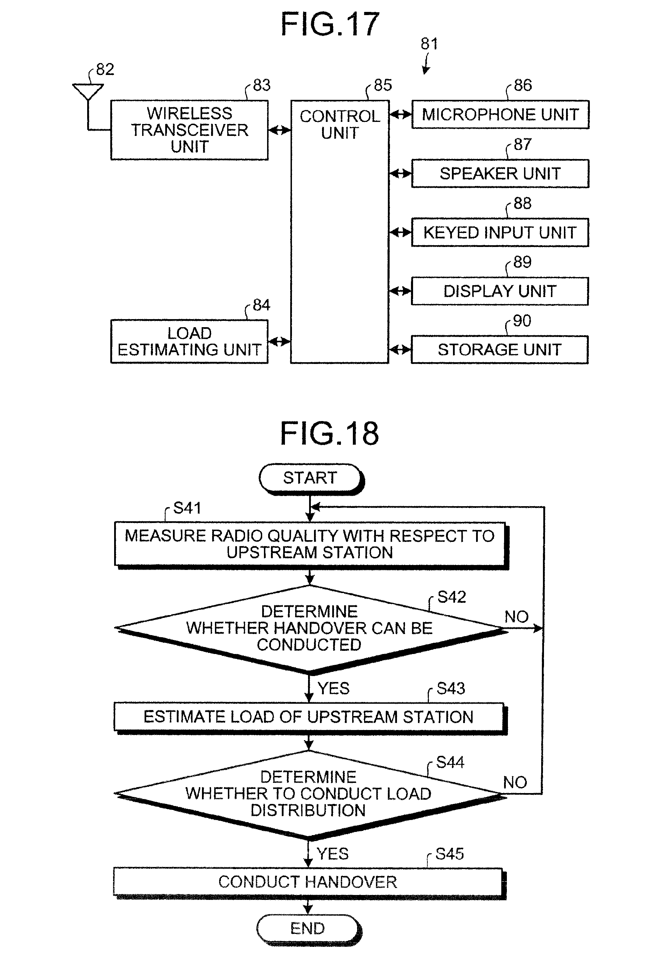

FIG. 17 is a diagram illustrating a mobile station according to the second embodiment. As depicted in FIG. 17, a mobile station 81 includes an antenna 82, a wireless transceiver unit 83, a load estimating unit 84, a control unit 85, a microphone unit 86, a speaker unit 87, a keyed input unit 88, a display unit 89, and a storage unit 90. The load estimating unit 84 receives, through the antenna 32 and the wireless transceiver unit 83, structure information reported from a connected upstream station or nearby upstream stations and estimates loads of the upstream stations, based on the structure information. The wireless transceiver unit 83 receives, through the antenna 82, signals transmitted from the connected upstream station or nearby upstream stations and measures radio quality for an upstream station, based on the received signals. The control unit 85 selects an upstream station for connection, based on the radio quality measured by the wireless transceiver unit 83 and the loads estimated by the load estimating unit 84.

The microphone unit 86, the speaker unit 87, the keyed input unit 88, the display unit 89, and the storage unit 90 are commonly known and thus the detailed explanation is omitted. The mobile station 81 is, for example, a mobile phone. The mobile station 81 may be configured by combining a device such as a wireless connection card including the wireless transceiver unit 83, the control unit 85, and the storage unit 90 with a personal computer functioning as the keyed input unit 88, the display unit 89, and the storage unit.

The mobile station 81 analyzes the contents of the map (MAP) of an upstream base station or relay station in a similar manner as the relay station 41 according to the second embodiment. The load estimating unit 84, based on the total number of stations in the map (MAP) or the number of relay stations and mobile stations directly connected, or based on the total burst length in the map (MAP), can estimate a load such as the radio channel resource utilization with respect to an upstream station.

FIG. 18 is a diagram illustrating a load distribution process according to the second embodiment. The load distribution process is performed by a relay station and mobile station that function as downstream stations in the wireless communication system depicted in FIG. 1.
Regarding the structure and operation of the relay station, see FIG. 8 through FIG. 16 and the explanation thereof. Regarding the structure and operation of the mobile station, see FIG. 17 and the explanation thereof.

As depicted in FIG. 18, the load distribution process of the second differs from the first embodiment in that at step S43, the downstream station receives the structure information reported in each frame from the upstream station (handover target) and based on the structure information, estimates a load of the upstream station (handover target). Regarding the measuring of the radio quality (step S41), determining whether to conduct handover (step S42), determining whether to conduct load distribution (step S44), and conducting handover (step S45), see step S31, step S32, step S34, and step S35 of the first embodiment.

According to the second embodiment, without adding a new signal or message for reporting load information, a load of an upstream station can be relayed to a downstream station. As a result, in a wireless communication system, the downstream station can perform load distribution reflecting the loads of upstream stations, thereby realizing more efficient load distribution.

## Claims

1. A relay station comprising:
a load measuring unit configured to measure a load of the relay station;
a load calculating unit configured to calculate, based on the load of the relay station and based on a load of an upstream base station or an upstream relay station directly connected to the relay station, a load reflecting a load of an upstream station; and
a reporting unit configured to report the calculated load as load information to a mobile station or a downstream relay station.

2. The relay station according to claim 1, further comprising a load collecting unit configured to collect load information of a base station or another relay station,
wherein the load calculating unit acquires the load of the upstream base station or the upstream relay station directly connected to the relay station from the load information collected by the load collecting unit.

3. The relay station according to claim 2, wherein the load calculating unit compares the load of the relay station measured by the load measuring unit with the load of the upstream base station or the upstream relay station directly connected to the relay station, and selects the larger load as a load to be reported.

4. The relay station according to claim 3, wherein the load information is reported as a signal point in an I/Q constellation, and the signal point in the I/Q constellation is correlated with a value of load in advance.

5. The relay station according to claim 3, wherein the load information is included in a message as an information element and is reported.

6. The relay station according to claim 1, further comprising:
a load estimating unit configured to estimate a load of a base station or another relay station based on structure information that defines a structure of a radio channel frame; and
a structure information adjusting unit configured to reflect the load calculated by the load calculating unit on the structure information,
wherein the load calculating unit acquires the load of the upstream base station or the upstream relay station directly connected to the relay station from the load estimated by the load estimating unit.

7. The relay station according to claim 6, wherein the structure information adjusting unit adjusts the structure information so that a mobile station or a downstream relay station directly connected to the relay station, and a hypothetical relay station or a hypothetical mobile station are deemed as stations connected to the relay station.

8. The relay station according to claim 6, wherein the structure information adjusting unit adjusts the structure information to include structure information reported from the upstream base station or the upstream relay station directly connected to the relay station.

9. A mobile station comprising a load estimating unit configured to estimate a load of an upstream station based on structure information that defines a structure of a radio channel frame and reflects a load of an upstream base station or an upstream relay station directly connected to the mobile station.

10. The mobile station according to claim 9, further comprising a unit configured to change base stations or relay stations to be connected directly to the mobile station, based on the load estimated by the load estimating unit.

11. A wireless communication system comprising:
a base station configured to report load information of the base station;
a relay station configured to measure a load of the relay station, calculate a load reflecting a load of an upstream station based on the measured load and a load of an upstream base station or an upstream relay station directly connected to the relay station, and report the calculated load to a mobile station or a downstream relay station; and
a mobile station configured to change, based on load information reported from the base station or the relay station, the base station or the relay station connected to the mobile station.

12. The wireless communication system according to claim 11, wherein the relay station, based on the load information reported from the base station or a second relay station, changes the base station or the second relay station connected to the relay station.

13. A load distribution method comprising:
measuring a load of a relay station;
calculating a load reflecting a load of an upstream station based on the measured load and a load of an upstream base station directly connected to the relay station or an upstream relay station directly connected to the relay station; and
reporting the calculated load, as load information, to a mobile station or a downstream relay station.

14. The load distribution method according to claim 13, further comprising changing, by a mobile station or a relay station and based on the load information from a base station or an upstream relay station, the base station or the relay station connected to the mobile station or the relay station.
